# EUROPÄISCHE PATENTSCHRIFT

(11) **EP 3 384 166 B1**
(45) Veröffentlichungstag und Bekanntmachung des Hinweises auf die Patenterteilung: **19.01.2022**
(21) Anmeldenummer: 16805102.7
(22) Anmeldetag: 01.12.2016
(51) Int. Cl.: F16B 5/02

(54) **FEST- ODER GLEITPUNKTSCHRAUBE**
FIXED OR SLIDING SCREW
VIS À POINT FIXE OU COULISSANT

(30) Priorität: 04.12.2015 DE 102015224367
(43) Veröffentlichungstag der Anmeldung: 10.10.2018
(73) Patentinhaber: EJOT Baubefestigungen GmbH, 57334 Bad Laasphe (DE)
(72) Erfinder: HEINRICH, Kostja, 57319 Bad Berleburg (DE)
(74) Vertreter: DREISS Patentanwälte PartG mbB
(86) Internationale Anmeldenummer: PCT/EP2016/079375
(87) Internationale Veröffentlichungsnummer: WO 2017/093374

(56) Entgegenhaltungen:
- EP-A1- 2 159 430
- GB-A- 2 120 795
- US-A- 3 216 303
- US-A1- 2009 311 066

## Beschreibung

Die Erfindung betrifft eine Fest- oder Gleitpunktschraube mit einem Schraubenkopf und einem einen Gewindeabschnitt aufweisenden Schraubenschaft, wobei der Schraubenkopf einen Drehmomentübertragungsabschnitt zur drehantreibbaren Rotation der Fest- oder Gleitpunktschraube um eine konzentrisch zum Schraubenkopf und zum Schraubenschaft angeordnete Schraubenachse aufweist und wobei der Schraubenkopf an seinem dem Gewindeabschnitt zugewandten Ende einen Bundabschnitt aufweist.

Derartige Fest- oder Gleitpunktschrauben sind aus dem Stand der Technik bekannt. Sie werden beispielsweise bei der Verschraubung von vorgehängten, hinterlüfteten Fassaden bei Gebäuden verwendet. Dabei ist es bekannt, ein vorgelochtes Blechprofil, einen sogenannten Wandhalter, der mit einem bspw. als Langloch ausgebildeten Gleitpunkt vorgelocht ist, mit einem anderen nicht vorgelochten Blechprofil, einem sogenannten Tragprofil zu verschrauben. Die aus dem Stand der Technik bekannten Fest- oder Gleitpunktschrauben werden dazu durch das vorgelochte Langloch durch den Wandhalter hindurchgesteckt und mit dem Tragprofil verschraubt. Mittels der Gleitpunkte kann eine eingeschränkte Beweglichkeit der Schraubenverbindung quer zur Schraubenachse aufgrund von bspw. thermisch induzierten Längenänderungen bereitgestellt werden. Zur Verschraubung weisen die bekannten Fest- oder Gleitpunktschrauben am Schraubenschaft eine Bohrspitze und ein selbstschneidendes Gewinde auf, so dass ein Vorlochen des Tragprofils nicht erforderlich ist.

Bei der Verschraubung von Wandhalter und Tragprofil werden verschiedenste Blechdicken des Wandhalters und des Tragprofils miteinander verschraubt und ein gewindefreier Teil unter dem Schraubenkopf verhindert ein zu starkes Anziehen der Verbindung und damit ein zu starkes Zusammenpressen der zu verbindenden Bauteile, so dass ein Gleiten der Verbindung möglich ist. Somit müsste für jede Bauteilkombination eine auf die exakte Blechdicke des Wandhalters und des Tragprofils abgestimmte Schraube bereitgestellt werden.

Das Bereitstellen einer derart großen Anzahl von verschiedenen Schrauben ist jedoch extrem kostenintensiv. Es ist daher aus dem Stand der Technik bekannt, mittels bspw. zweier verschiedener Fest- oder Gleitpunktschrauben einen Bereich der Materialkombination verschiedener Blechdicken abzudecken, so dass bspw. mit einer Fest- oder Gleitpunktschraube Schraubenverbindungen für Bauteilkombinationen mit einer Gesamtdicke zwischen 3,1 und 5,0 mm abgedeckt werden können, wobei mit einer zweiten Fest- oder Gleitpunktschraube Schraubenverbindungen für Bauteilkombinationen mit einer Gesamtdicke zwischen 5,0 und 7,0 mm abgedeckt werden können. Die bekannten Fest- oder Gleitpunktschrauben weisen hierzu am Schraubenschaft nicht durchgängig ein Gewinde auf, sondern weisen im Bereich des Schraubenkopfs auch einen gewindefreien Abschnitt am Schraubenschaft auf.

Bei der Verwendung dieser Fest- oder Gleitpunktschrauben kann einerseits das Problem auftreten, dass ein Monteur die Schrauben aufgrund der optisch kaum sichtbaren Längenunterschiede verwechselt.

Ferner kann bei einer Schraubenverbindung, deren Gesamtdicke an der Untergrenze der für die Fest- oder Gleitpunktschraube zulässigen Gesamtdicke liegt, ein Klappern der Verbindung auftreten.

Darüber hinaus kann bei einer Schraubenverbindung, deren Gesamtdicke an der Obergrenze der für die Fest- oder Gleitpunktschraube zulässigen Gesamtdicke liegt, ein Auftreten von Zwängungen auftreten, welche die Beweglichkeit der Schraubenverbindung quer zur Schraubenachse aufgrund von thermisch induzierten Längenänderungen verhindert, so dass es zu einem Klemmen der Schraubenverbindung kommt. Ein derartiges Klemmen kann bspw. auftreten, wenn die Gesamtdicke der Schraubengrenze exakt der für die Fest- oder Gleitpunktschraube zulässigen Gesamtdicke entspricht. Aufgrund von Fertigungstoleranzen kann eine geringfügige Abweichung der Länge des gewindefreien Abschnitts bereits dann zu einem Verklemmen führen.

Aus der WO2008/028838 A1 ist eine Gleitpunktschraube bekannt, welche eine Anpassbarkeit der Gleitpunktschraube an verschiedene Blechdicken durch Einsatz einer konischen Dichtscheibe mit einem Elastomer löst, wobei der Schraubenkopf ebenfalls einen entsprechenden konischen Abschnitt aufweist. Das Elastomer ist auf einer dem zu verschraubenden Bauteil zugewandten Seite der Gleitpunktschraube angeordnet und dabei erhöhter Beanspruchung und somit auch erhöhter Korrosion ausgesetzt. Darüber hinaus wird von dem Elastomer ein Gleiten der Schraubenverbindung aufgrund des hohen Reibungskoeffizienten erschwert.

Die GB 2 120 795 A beschreibt eine Scheibe und ein deformierbares Element, die zwischen einem Schraubenkopf und den zu verbindenden Bauteilen eingesetzt werden. Bei der aus der GB 2 120 795 A bekannten Anordnung ist die Scheibe 1 zwischen dem Bund des Schraubenkopfs und dem defomierbaren Element 2 angeordnet.

Aus der EP 2 159 430 A1 ist eine Verbindung zwischen einem Rahmenprofil und einer Außenwand eines Gebäudes bekannt. Bei dieser Anordnung weist die Schraube zwei Gewindeabschnitte mit unterschiedlichen Durchmessern auf. Ein Stützgewinde 18, welches sich unmittelbar an den Bund des Schraubenkopfs anschließt, hat einen gegenüber dem Gewinde 12 der Schraube einen größeren Durchmesser. Das Stützgewinde schneidet ein Gewinde in das Rahmenprofil, um eine optimale Abdichtung zwischen Stützgewinde und Rahmenprofil zu erreichen. Dadurch wird eine Bewegung des Rahmenprofils relativ zu der Schraube unterbunden.

Aus der US 3,216,303 ist eine Anordnung zur Erfassung des Anzugsdrehmoments bzw. einer Vorspannung einer Schraubverbindung bekannt, bei der zwischen zwei Scheiben ein geschlitzter Drahtring angeordnet ist. Eine der beiden Scheiben weist eine kegelstumpfförmige Fläche auf, die beim Anziehen der Schraubverbindung eine radial nach innen wirkende Kraft auf den Drahtring ausgeübt. Ein Spalt zwischen den Enden 20, 21 des Drahtrings ist so bemessen, dass sich die Enden 20, 21 mit Erreichen des gewünschten Anzugsdrehmoments berühren. Auf diese Weise kann das Anzugsdrehmoment bzw. die Spannkraft der Schraubverbindung visuell überprüft werden.

Aus der US 2009/0311066 A1 (D4) ist eine Anordnung umfassend zwei Scheiben und eine dazwischen angeordnete deformierbare Scheibe bekannt. Diese Anordnung wird zwischen dem Bund einer Schraube und den zu verschraubenden Bauteilen angeordnet. Durch das Anziehen der Schraubverbindung weicht der deformierbare Ring in radialer Richtung nach außen aus und erlaubt dadurch eine optische Kontrolle des Anzugsdrehmoments.

Der Erfindung liegt daher die Aufgabe zugrunde, eine Fest- oder Gleitpunktschraube bereitzustellen, welche die eingangs genannten Nachteile vermeidet und welche zugleich einfach und kostengünstig herstellbar ist.

Diese Aufgabe wird mit einer Fest- oder Gleitpunktschraube mit den Merkmalen des Anspruchs 1 gelöst. Die Fest- oder Gleitpunktschraube zeichnet sich dadurch aus, dass auf der dem Drehmomentübertragungsabschnitt abgewandten Seite des Bundabschnitts ein Pufferelement aus einem elastischen Kunststoff angeordnet ist und dass auf der dem Bundabschnitt abgewandten Seite des Pufferelements eine Gleitscheibe angeordnet ist. Diese Gleitscheibe ist vorzugsweise metallisch oder aus einem Kunststoff hergestellt. Dadurch, dass der Schraubenschaft im Bereich des Schraubenkopfs einen Schaftbund mit einem Schaftdurchmesser aufweist, der größer ist als ein Gewindedurchmesser im Bereich des Gewindeabschnitts und längr als die Dicke der Pufferscheibe und des Gleitrings kann verhindert werden kann, dass das Gewinde der Fest- oder Gleitpunktschraube mit einer Wandung eines Lochs eines zu verschraubenden Bauteils derart in Kontakt kommt dass die Fest- oder Gleitpunktschraube bzw. die Schraubenverbindung gelöst wird, indem die Fest- oder Gleitpunktschraube durch Kontakt mit der Wandung eines Langlochs in Rotation versetzt wird.

In axialer Richtung, d.h. in Richtung der Schraubenachse sind der Bundabschnitt, das Pufferelement und die Gleitscheibe folglich aufeinander folgend angeordnet.

Durch Vorsehen des Pufferelements aus elastischem Kunststoff kann einerseits eine Anpassbarkeit der Fest- oder Gleitpunktschraube an verschiedene Bauteilkombinationen einer Schraubenverbindung erreicht werden, wobei andererseits aufgrund der Gleitscheibe ein Gleiten der Fest- oder Gleitpunktschraube bzw. einer Schraubenverbindung erleichtert werden kann. Ein zu starkes Anziehen der Schraubenverbindung kann durch das Pufferelement vermieden werden. Der Verschraubungsprozess muss hierfür optisch anschlagorientiert gestoppt werden, wenn das Pufferelement zu etwa 25 % komprimiert ist.

Vorteilhafterweise ist der Schraubenschaft mit dem Schraubenkopf unlösbar verbunden. Der Drehmomentübertragungsabschnitt kann beispielsweise als Außensechskant oder als Aussparung wie bspw. als Innentorx oder Innensechskant ausgebildet sein.

Eine erste vorteilhafte Weiterbildung der Fest- oder Gleitpunktschraube sieht vor, dass der Bundabschnitt auf seiner dem Drehmomentübertragungsabschnitt abgewandten Seite eine Anlagefläche für das Pufferelement aufweist, die in einer Ebene senkrecht zur Schraubenachse angeordnet ist. Vorzugsweise weitet sich der Schraubenkopf im Bereich des Bundabschnitts radial, d.h. senkrecht zur Schraubenachse auf. Durch eine derartige Aufweitung kann eine vergrößerte Anlagefläche bereitgestellt werden.

Besonders bevorzugt ist es, wenn das Pufferelement zwei plane Flächen aufweist, die parallel zueinander und senkrecht zur Schraubenachse angeordnet sind.

Als besonders vorteilhaft hat es sich ferner erwiesen, wenn das Pufferelement als Ring ausgebildet ist. Das Pufferelement ist dann vorteilhafterweise radial, d.h. senkrecht zur Schraubenachse außerhalb des Schraubenschafts angeordnet bzw. umgreift den Schraubenschaft radial. Wenn das Pufferelement als zusammenhängender Ring ausgebildet ist, erleichtert dies die Montage der Fest- oder Gleitpunktschraube. Es ist jedoch auch denkbar, das Pufferelement aus einzelnen Abschnitten zusammenzufügen.

Vorteilhafterweise weist die Gleitscheibe zwei plane Flächen auf, die parallel zueinander und senkrecht zur Schraubenachse angeordnet sind.

Durch Vorsehen der Anlagefläche für das Pufferelement und der beiden planen Flächen am Pufferelement kann dann gewährleistet werden, dass die Gleitscheibe mit einer Fläche an einem zu verschraubenden Bauteil zur Anlage kommt, die senkrecht zur Schraubenachse angeordnet ist.

Als besonders vorteilhaft hat es sich ferner erwiesen, wenn die Fest- oder Gleitpunktschraube als Bohrschraube ausgebildet ist, wobei der Schraubenschaft eine Bohrspitze und ein selbstschneidendes Gewinde aufweist. Vorteilhafterweise ist die Bohrspitze im Vergleich zum Gewindedurchmesser des selbstschneidenden Gewindes am Schraubenschaft vergleichsweise klein ausgebildet, so dass eine möglichst große Klemmwirkung im nicht vorgelochten Bauteil erreicht werden kann. Darüber hinaus weist das selbstschneidende Gewinde vorteilhafterweise eine geringe Gewindesteigung auf.

Besonders bevorzugt ist es dabei, wenn der Schraubenschaft einen gewindefreien Abschnitt aufweist, der zwischen dem Gewindeabschnitt und dem Schraubenkopf angeordnet ist. Mit einem solchen gewindefreien Abschnitt kann ein Gleiten einer Schraubenverbindung, d.h. eine Beweglichkeit der Schraubenverbindung quer zur Schraubenachse aufgrund von bspw. thermisch induzierten Längenänderungen ermöglicht werden. 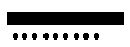 Um das Gleiten zu erleichtern ist es besonders vorteilhaft, wenn die Gleitscheibe auf der dem Pufferelement abgewandten Seite eine Beschichtung aus Teflon aufweist. Es ist jedoch auch denkbar, dass die Gleitscheibe aus Teflon besteht. Mit einer derartigen Beschichtung kann ein Gleiten auf einem Wandhalter aus Aluminium, Edelstahl oder Kunststoff aufgrund eines vorteilhaften Reibungskoeffizienten ermöglicht werden.

In einer Weiterbildung der Fest- oder Gleitpunktschraube ist vorgesehen, dass die Gleitscheibe einen Außendurchmesser aufweist und dass der Bundabschnitt einen Bunddurchmesser aufweist, wobei der Außendurchmesser der Gleitscheibe und der Bunddurchmesser derart ausgelegt sind, dass der Bundabschnitt und die Gleitscheibe das Pufferelement radial überdecken. Vorteilhafterweise weist die Gleitscheibe ferner einen Innendurchmesser auf, wobei der Schraubenschaft einen Schaftdurchmesser aufweist. Besonders bevorzugt ist es dabei, wenn der Innendurchmesser und der Außendurchmesser der Gleitscheibe sowie der Bunddurchmesser derart ausgelegt sind, dass ein Einkippen der Gleitscheibe bzw. des Schraubenkopfs in ein Langloch einer Schraubverbindung verhindert werden kann. Vorteilhafterweise korrespondiert der Innendurchmesser der Gleitscheibe mit dem Schaftdurchmesser ferner derart, dass das Pufferelement beim Verschrauben nicht zwischen einen Spalt zwischen Gleitscheibe und Schraubenschaft gedrückt und somit zerstört wird.

In einer weiteren vorteilhaften Weiterbildung der Fest- oder Gleitpunktschraube ist vorgesehen, dass das Pufferelement aus einem Ethylen-Propylen-Dien-Kautschuk (EPDM) hergestellt ist. Ethylen-Propylen-Dien-Kautschuk (EPDM) hat sich aufgrund seiner hohen Temperatur- und UV-Beständigkeit und einer vergleichsweise hohen Lebensdauer als besonders vorteilhaft erwiesen.

Besonders bevorzugt ist es dabei, wenn der Schraubenkopf, Schraubenschaft und die Gleitscheibe aus einem Edelstahl A2 oder A4 hergestellt sind.

Um eine Montage der Fest- oder Gleitpunktschraube zu erleichtern ist es besonders vorteilhaft, wenn der Schraubenkopf, das Pufferelement und die Gleitscheibe miteinander verbunden sind. Vorteilhafterweise ist der Schraubenkopf dann mit dem Pufferelement verbunden, das wiederum mit der Gleitscheibe verbunden ist.

Als besonders vorteilhaft hat es sich dabei erwiesen, wenn der Schraubenkopf, das Pufferelement und die Gleitscheibe miteinander verklebt oder durch Vulkanisieren des Pufferelements miteinander verbunden sind. Als besonders kostengünstig für die Herstellung der Fest- oder Gleitpunktschraube hat es sich erwiesen, wenn lediglich das Pufferelement und die Gleitscheibe miteinander verklebt oder durch Vulkanisieren des Pufferelements miteinander verbunden sind, jedoch keine feste Verbindung zwischen Schraubenkopf und Pufferelement besteht.

Gemäß einer weiteren vorteilhaften Ausgestaltung der Fest- oder Gleitpunktschraube ist eine optische oder mechanische Anzugskontrolle vorgesehen, die zur Überprüfung eines Anzugsdrehmoments und/oder einer Einschraubtiefe der Fest- oder Gleitpunktschraube ausgelegt ist. Dabei ist es denkbar, dass der Außendurchmesser der Gleitscheibe größer ist als der Bunddurchmesser des Bundabschnitts, wobei das Erreichen des optimalen Anzugsdrehmoments und/oder der optimalen Einschraubtiefe dadurch festgestellt werden kann, wenn die Gleitscheibe bei Blick in Richtung der Schraubenachse vom Pufferelement vollständig überdeckt wird.

Die eingangs genannte Aufgabe wird auch gelöst durch eine Schraubenverbindung mit den Merkmalen des Anspruchs 15. Die Schraubenverbindung umfasst ein erstes und ein zweites Bauteil und zeichnet sich dadurch aus, dass das erste Bauteil und das zweite Bauteil vom ersten Bauteil her mit einer Fest- oder Gleitpunktschraube nach wenigstens einem der Ansprüche 1 bis 14 miteinander verschraubt sind.

Vorteilhafterweise ist der Schraubenschaft der Fest- oder Gleitpunktschraube durch ein vorgelochtes Loch, insbesondere durch ein Langloch durch das erste Bauteil hindurchgesteckt und mittels einer Bohrspitze und eines selbstschneidenden Gewindes mit dem zweiten Bauteil verschraubt.

In einer vorteilhaften Weiterbildung der Schraubenverbindung ist vorgesehen, dass der Schraubenschaft einen gewindefreien Abschnitt aufweist, der zwischen dem Gewindeabschnitt und dem Schraubenkopf angeordnet ist und dass der gewindefreie Abschnitt eine Länge aufweist, die größer ist als eine Dicke des ersten Bauteils. Durch Vorsehen einer derart ausgewählten gewindefreien Abschnitts kann eine Beweglichkeit der Schraubenverbindung quer zur Schraubenachse gewährleistet werden.

Besonders bevorzugt ist es ferner, wenn der Schaftbund eine axiale Länge aufweist, die kleiner ist als eine Dicke des ersten Bauteils.

Weitere Einzelheiten und vorteilhafte Weiterbildungen sind der nachfolgenden Beschreibung zu entnehmen, anhand derer eine Ausführungsform der Erfindung näher beschrieben und erläutert ist.

Es zeigen:
- Figur 1: eine Schraubenverbindung mit einer erfindungsgemäßen Fest- oder Gleitpunktschraube im Schnitt;
- Figur 2: einen vergrößerten Ausschnitt einer erfindungsgemäßen Fest- oder Gleitpunktschraube in Alleindarstellung;
- Figur 3: einen vergrößerten Ausschnitt einer Schraubenverbindung gemäß Figur 1 mit nicht vollständig eingeschraubter Fest- oder Gleitpunktschraube;
- Figur 4: den Ausschnitt gemäß Figur 3 mit ordnungsgemäßer Einschraubtiefe und/oder ordnungsgemäßem Anzugsdrehmoment;
- Figur 5: den Ausschnitt gemäß Figur 3 und 4 mit zu stark angezogener Fest- oder Gleitpunktschraube; und
- Figur 6: den Ausschnitt gemäß der Figuren 3 bis 5 mit verkippter Fest- oder Gleitpunktschraube.

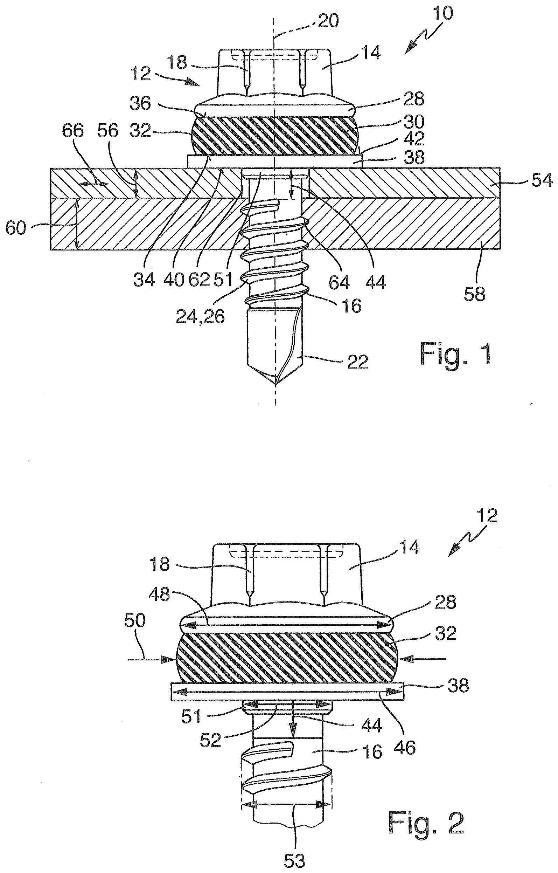

Figur 1 zeigt eine Schraubenverbindung 10 mit einer erfindungsgemäßen Fest- oder Gleitpunktschraube 12. Die Fest- oder Gleitpunktschraube 12 weist einen Schraubenkopf 14 und einen Schraubenschaft 16 auf. Der Schraubenkopf 14 weist einen als Außensechskant ausgebildeten Drehmomentübertragungsabschnitt 18 auf, mittels dem die Fest- oder Gleitpunktschraube 12 zur Rotation um eine Schraubenachse 20, die konzentrisch zum Schraubenkopf 14 und zum Schraubenschaft 16 angeordnet ist, antreibbar ist.

Die Fest- oder Gleitpunktschraube 12 ist als Bohrschraube ausgebildet, wobei der Schraubenschaft 16 eine Bohrspitze 22 und einen Gewindeabschnitt 24 mit einem selbstschneidenden Gewinde 26 aufweist.

Der Schraubenkopf 14 weist an seinem dem Gewindeabschnitt 26 zugewandten Ende einen Bundabschnitt 28 auf, an dem sich der Schraubenkopf 14 in radialer Richtung, d.h. senkrecht zur Schraubenachse 20 aufweitet. Der Bundabschnitt 28 weist auf seiner dem Drehmomentübertragungsabschnitt 18 abgewandten Seite eine Anlagefläche 30 auf, die in einer Ebene senkrecht zur Schraubenachse 20 angeordnet ist.

Auf der dem Drehmomentübertragungsabschnitt 18 abgewandten Seite des Bundabschnitts 28 ist ferner ein Pufferelement 32 aus einem elastischen Ethylen-Propylen-Dien-Kautschuk (EPDM) angeordnet. Das Pufferelement 32 weist zwei plane Flächen 34, 36 auf, die parallel zueinander und senkrecht zur Schraubenachse 20 angeordnet sind. Auf der dem Bundabschnitt 28 abgewandten Seite des Pufferelements 32 ist eine Gleitscheibe 38 angeordnet, die ebenfalls zwei plane Flächen 40, 42 aufweist, die parallel zueinander und senkrecht zur Schraubenachse 20 angeordnet sind. Die Gleitscheibe 38 ist aus Metall, vorzugsweise aus Edelstahl, oder aus einem Kunststoff hergestellt. Der Schraubenkopf 14, der Schraubenschaft 16 sind aus einem Edelstahl hergestellt, wobei die Gleitscheibe 38 auf der dem Pufferelement 32 abgewandten Seite 40 eine Beschichtung aus Teflon aufweist. Wenn die Gleitscheibe 38 aus einem Kunststoff hergestellt ist, ist auch denkbar, dass die Gleitscheibe 38 aus Teflon besteht. Das Pufferelement 32 ist als Ring ausgebildet und umgreift somit den Schraubenschaft 16 in radialer Richtung. Der Schraubenschaft 16 weist einen gewindefreien Abschnitt 44 auf, der zwischen dem Gewindeabschnitt 24 und dem Schraubenkopf 14 angeordnet ist.

Wie in Figur 2 deutlich zu erkennen ist, weist die Gleitscheibe 38 einen Außendurchmesser 46 auf, wobei der Bundabschnitt 28 einen Bunddurchmesser 48 aufweist. Das Pufferelement 32 weist einen Pufferelementdurchmesser 50 auf. Der Außendurchmesser 46, der Bunddurchmesser 48 und der Pufferelementdurchmesser 50 sind derart ausgelegt, dass der Bundabschnitt 28 und die Gleitscheibe 38 das Pufferelement 32 radial überdecken. Vorteilhafterweise ist der Außendurchmesser 46 größer als der Bunddurchmesser 48, so dass eine optische Anzugskontrolle ermöglicht werden kann, die zur Überprüfung eines Anzugsdrehmoments und/oder einer Einschraubtiefe der Fest- oder Gleitpunktschraube 12 ausgelegt ist. Das Erreichen des optimalen Anzugsdrehmoments und/oder der optimalen Einschraubtiefe kann dadurch festgestellt werden, dass die Gleitscheibe 38 bei Blick in Richtung der Schraubenachse 20 vom Pufferelement 32 bei Erreichen des optimalen Anzugsdrehmoments und/oder der optimalen Einschraubtiefe erstmalig vollständig überdeckt wird, wenn das Pufferelement 32 zwischen Gleitscheibe 38 und Bundabschnitt 28 zusammengequetscht wird.

Die Gleitscheibe 38 weist ferner einen Innendurchmesser (ohne Bezugszeichen) auf, wobei der Schraubenschaft 16 einen kreiszylindrischen Schaftbund 51 mit einem Schaftdurchmesser 52 aufweist. Der Schaftdurchmesser 52 ist größer als ein Gewindedurchmesser 53 im Bereich des Gewindeabschnitts 24.

Der Innendurchmesser der Gleitscheibe 38 korrespondiert mit dem Schaftdurchmesser 52 ferner derart, dass das Pufferelement 32 beim Verschrauben nicht zwischen einen Spalt zwischen Gleitscheibe 38 und Schraubenschaft 16 gedrückt und somit zerstört werden kann.

Der Schraubenkopf 14, das Pufferelement 32 und die Gleitscheibe 38 sind vorzugsweise durch Verkleben oder Vulkanisieren miteinander verbunden, wobei der Schraubenkopf 14 mit dem Pufferelement 32 verbunden ist und wobei das Pufferelement 32 wiederum mit der Gleitscheibe 38 verbunden ist.

Zurückkommend auf Figur 1 weist die Schraubenverbindung 10 ferner ein erstes Bauteil 54, bspw. ein als Wandhalter ausgebildetes Blechprofil mit einer Dicke 56 auf. Die Schraubenverbindung 10 weist ferner ein zweites Bauteil 58, bspw. ein als Tragprofil ausgebildetes Blechprofil mit einer Dicke 60 auf. Derartige Wandhalter 54 und Tragprofile 58 kommen bei vorgehängten, hinterlüfteten Fassaden zum Einsatz.

Der Wandhalter 54 weist einen als Langloch ausgebildeten Gleitpunkt 62 auf, wobei die Fest- oder Gleitpunktschraube 12 durch das vorgelochte Langloch 62 durch den Wandhalter 54 hindurchgesteckt und mit dem Tragprofil 58 verschraubt ist. Mittels der Bohrspitze 22 und des selbstschneidenden Gewindes 26 ist dabei ein Innengewinde 64 in das Tragprofil 58 eingebracht. Durch Vorsehen des Gleitpunkts 62 bzw. des Langlochs 62 kann eine eingeschränkte Beweglichkeit der Schraubenverbindung 10 quer zur Schraubenachse 20, d.h. in Richtung des Pfeils 66 aufgrund von bspw. thermisch induzierten Längenänderungen bereitgestellt werden. Der Wandhalter 54 weist zusätzlich zu dem Langloch 62 auch als Festpunkt ausgebildete Rundlöcher auf, wobei die Fest- oder Gleitpunktschraube 12 durch die Langlöcher 62 und die Rundlöcher hindurchgesteckt werden kann auch der Wandhalter 54 so mit dem Tragprofil 58 verschraubt werden kann. Bei Verschraubung mit einem Festpunkt hat die Fest- oder Gleitpunktschraube 12 den Vorteil, einen sogenannten "weichen Schraubfall" sicherzustellen, um ein Überdrehen des Gewindes 26 zu verhindern.

Durch Bereitstellung des Pufferelements 32 kann die erfindungsgemäße Fest- oder Gleitpunktschraube 12 aufgrund der Elastizität bzw. Kompressibilität des Pufferelements 32 bei Schraubenverbindungen 10 mit verschiedenen Bauteilkombinationen, d.h. mit verschiedenen Dicken 56, 60 des ersten und des zweiten Bauteils 54, 58 eingesetzt werden, wobei aufgrund der Gleitscheibe 38 einerseits ein Schutz des Pufferelements 32 und andererseits ein leichtes Gleiten auf insbesondere metallischen Bauteilen 54 erreicht werden kann, da die Verbindung nicht zu stark angezogen werden kann. Eine derartige Schraubenverbindung wird auch als sogenannte "weiche Verschraubung" bezeichnet. Es ist jedoch auch einer Verschraubung von Bauteilen aus Kunststoff denkbar.

Dadurch, dass der Schaftdurchmesser 52 größer als der Gewindedurchmesser 53 ist, kann verhindert werden, dass das Gewinde 26 mit einer Wandung des Langlochs 62 des Wandhalters 54 derart in Kontakt kommt dass die Fest- oder Gleitpunktschraube 12 bzw. die Schraubenverbindung gelöst wird. Vorteilhafterweise weist der kreiszylindrische Schaftbund 51 eine axiale Länge auf, die kleiner ist als die Dicke 56 des Wandhalters 54.

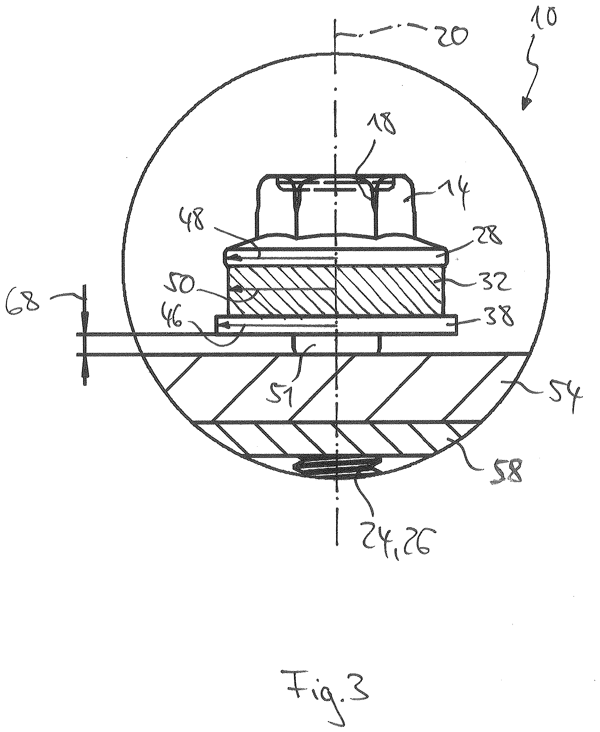

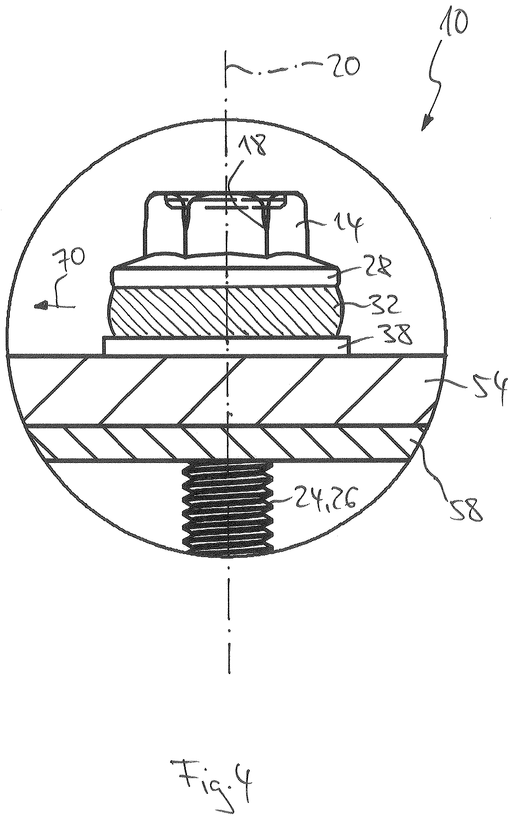

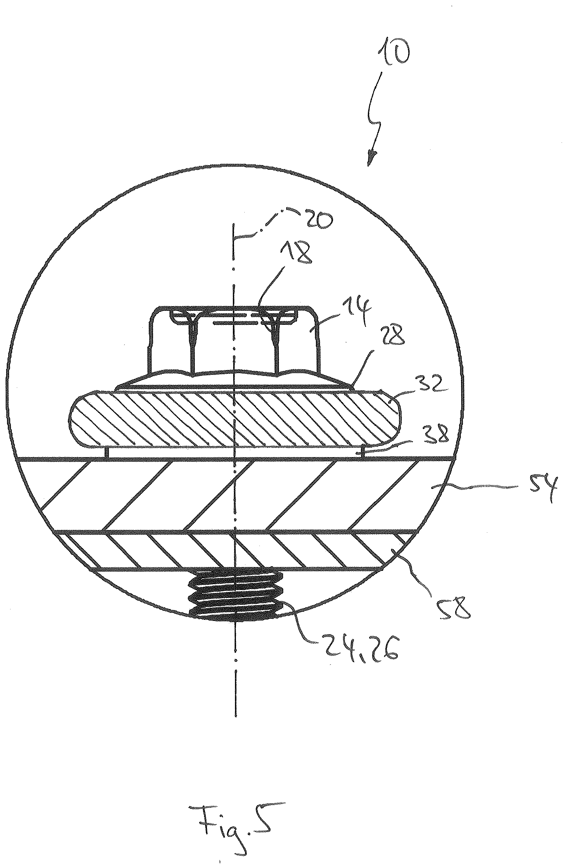

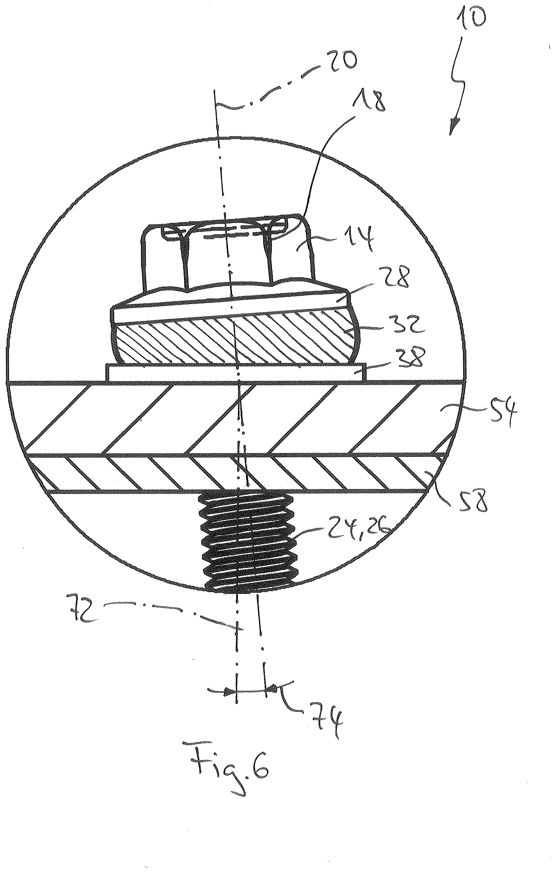

In den Figuren 3 bis 6 ist jeweils ein Ausschnitt einer erfindungsgemäßen Schraubenverbindung 10 gezeigt, wobei Figur 3 einen vergrößerten Ausschnitt der Schraubenverbindung 10 gemäß Figur 1 mit nicht vollständig eingeschraubter Fest- oder Gleitpunktschraube 12 zeigt und wobei Figur 4 den Ausschnitt gemäß Figur 3 mit ordnungsgemäßer Einschraubtiefe und/oder ordnungsgemäßem Anzugsdrehmoment zeigt und wobei Figur 5 den Ausschnitt gemäß Figur 3 und 4 mit zu stark angezogener Fest- oder Gleitpunktschraube 12 zeigt und wobei Figur 6 den Ausschnitt gemäß der Figuren 3 bis 5 mit verkippter Fest- oder Gleitpunktschraube 12 zeigt. Sich in den Figuren entsprechende Bezugszeichen sind mit den entsprechenden Bezugszeichen der Figuren 1 und 2 versehen.

In den Figuren 3 bis 5 ist eine optische Anzugskontrolle dadurch realisiert, dass der Außendurchmesser 46 der Gleitscheibe 38 größer ist als der Bunddurchmesser 48 des Bundabschnitts 28. Bei Blick in Richtung der Schraubenachse 20 kann so ein Erreichen eines optimalen Anzugsdrehmoments und/oder einer optimalen Einschraubtiefe der Fest- oder Gleitpunktschraube 12 erreicht werden kann.

Der Pufferelementdurchmesser 50 ist dabei kleiner gewählt als der Bunddurchmesser 48 des Bundabschnitts 28. Wenn nun, wie in Figur 3 deutlich erkennbar ist, die Fest- oder Gleitpunktschraube 12 nicht vollständig in das zweite Bauteil 58 eingeschraubt ist, wird das Pufferelement 32 zwischen Bundabschnitt 28 und Gleitscheibe 38 nicht komprimiert, wobei folglich auch der Pufferelementdurchmesser 50 nicht vergrößert wird. Somit verbleibt zwischen der Gleitscheibe 38 und dem ersten Bauteil 54 ein Spalt 68.

Sobald die Gleitscheibe 38 zur Anlage am ersten Bauteil 54 kommt, wenn das Gewinde 26 der Fest- oder Gleitpunktschraube 12 in das zweite Bauteil 56 eingeschraubt wird, wird das Pufferelement 32 nach radial außen in Richtung des Pfeils 70 gedrückt (vgl. Figur 4). In Figur 4 ist dabei zu erkennen, dass sich das Pufferelement 32 und die Gleitscheibe 38 bei Blick in Richtung der Schraubenachse 20 derart überlagern, dass der Pufferelementdurchmesser 50 des komprimierten Pufferelements 32 dem Außendurchmesser 46 der Gleitscheibe 38 entspricht, so dass eine ordnungsgemäße Einschraubtiefe und/oder ein ordnungsgemäßes Anzugsdrehmoment detektiert werden kann, wenn das Pufferelement 32 beginnt, die Gleitscheibe 38 radial zu überdecken.

Figur 5 zeigt die Schraubenverbindung 10, wenn die ordnungsgemäße Einschraubtiefe und/oder das ordnungsgemäße Anzugsdrehmoment überschritten ist. Dann ist das Pufferelement 32 so weit komprimiert, dass der Pufferelementdurchmesser 50 den Außendurchmesser 46 der Gleitscheibe 38 bei weitem überschreitet. Somit kann insgesamt eine optische Anzugskontrolle realisiert werden.

In Figur 6 ist die Schraubenachse 20 gegenüber einer senkrecht zum ersten und/oder zweiten Bauteil 54, 58 angeordneten Achse 72 um einen Winkel 74 verkippt angeordnet. Eine derartige Verkippung kann bspw. durch nicht exakt koaxiales Eindrehen der Fest- oder Gleitpunktschraube gegenüber der Oberfläche des ersten Bauteils 54 bzw. durch die Gewindesteigung des Gewindes 26 hervorgerufen werden. Durch das Pufferelement 32 kann die Verkippung ausgeglichen werden, so dass die Gleitscheibe 38 stets vollflächig auf der Oberfläche des ersten Bauteils 54 anliegt, so dass das zweite Bauteil 58 vollflächig am ersten Bauteil 54 anliegt.

Insgesamt können mit dem Pufferelement 32 auch thermisch bedingte Ausdehnungen bzw. Änderungen der Dicke 56, 60 des ersten und des zweiten Bauteils 54, 58 ausgeglichen werden, so dass stets ein Gleiten der Schraubenverbindung 12 im Langloch 62 möglich ist. Im Brandfall kann ein Aufschmelzen des Pufferelements 32 erfolgen, so dass die Schraubenverbindung 12 insgesamt gelockert wird, wobei eine vorgehängte, hinterlüftete Fassade somit besonders leicht demontiert werden kann.

## Patentansprüche

1. Fest- oder Gleitpunktschraube (12) mit einem Schraubenkopf (14) und einem einen Gewindeabschnitt (24) aufweisenden Schraubenschaft (16), wobei der Schraubenkopf (14) einen Drehmomentübertragungsabschnitt (18) zur drehantreibbaren Rotation der Fest- oder Gleitpunktschraube (12) um eine konzentrisch zum Schraubenkopf (14) und zum Schraubenschaft (16) angeordnete Schraubenachse (20) aufweist und wobei der Schraubenkopf (14) an seinem dem Gewindeabschnitt (24) zugewandten Ende einen Bundabschnitt (28) aufweist, wobei auf der dem Drehmomentübertragungsabschnitt (18) abgewandten Seite des Bundabschnitts (28) ein Pufferelement (32) aus einem elastischen Kunststoff angeordnet ist und dass auf der dem Bundabschnitt (28) abgewandten Seite des Pufferelements (32) eine Gleitscheibe (38) angeordnet ist, **dadurch gekennzeichnet, dass** der Schraubenschaft (16) im Bereich des Schraubenkopfs (14) einen Schaftbund (51) mit einem Schaftdurchmesser (52) aufweist, der größer ist als ein Gewindedurchmesser (53) im Bereich des Gewindeabschnitts (24), und dass der Schaftbund (51) in Richtung des Gewindeabschnitts (24) über die Gleitscheibe (38) hinausragt.

2. Fest- oder Gleitpunktschraube (12) nach Anspruch 1, **dadurch gekennzeichnet, dass** der Bundabschnitt (28) auf seiner dem Drehmomentübertragungsabschnitt (18) abgewandten Seite eine Anlagefläche (30) für das Pufferelement (32) aufweist, die in einer Ebene senkrecht zur Schraubenachse (20) angeordnet ist.

3. Fest- oder Gleitpunktschraube (12) nach Anspruch 1 oder 2, **dadurch gekennzeichnet, dass** das Pufferelement (32) zwei plane Flächen (34, 36) aufweist, die parallel zueinander und senkrecht zur Schraubenachse (20) angeordnet sind.

4. Fest- oder Gleitpunktschraube (12) nach wenigstens einem der vorhergehenden Ansprüche, **dadurch gekennzeichnet, dass** das Pufferelement (32) als Ring ausgebildet ist.

5. Fest- oder Gleitpunktschraube (12) nach wenigstens einem der vorhergehenden Ansprüche, **dadurch gekennzeichnet, dass** die Gleitscheibe (38) zwei plane Flächen (40, 42) aufweist, die parallel zueinander und senkrecht zur Schraubenachse (20) angeordnet sind.

6. Fest- oder Gleitpunktschraube (12) nach wenigstens einem der vorhergehenden Ansprüche, **dadurch gekennzeichnet, dass** die Fest- oder Gleitpunktschraube (12) als Bohrschraube ausgebildet ist, wobei der Schraubenschaft (16) eine Bohrspitze (22) und ein selbstschneidendes Gewinde (26) aufweist.

7. Fest- oder Gleitpunktschraube (12) nach wenigstens einem der vorhergehenden Ansprüche, **dadurch gekennzeichnet, dass** der Schraubenschaft (16) einen gewindefreien Abschnitt (44) aufweist, der zwischen dem Gewindeabschnitt (24) und dem Schraubenkopf (14) angeordnet ist.

8. Fest- oder Gleitpunktschraube (12) nach wenigstens einem der vorhergehenden Ansprüche, **dadurch gekennzeichnet, dass** die Gleitscheibe (38) auf der dem Pufferelement (32) abgewandten Seite eine Beschichtung aus Teflon aufweist.

9. Fest- oder Gleitpunktschraube (12) nach wenigstens einem der vorhergehenden Ansprüche, **dadurch gekennzeichnet, dass** die Gleitscheibe (38) einen Außendurchmesser (46) aufweist und dass der Bundabschnitt (28) einen Bunddurchmesser (48) aufweist, wobei der Außendurchmesser (46) der Gleitscheibe (38) und der Bunddurchmesser (48) derart ausgelegt sind, dass der Bundabschnitt (28) und die Gleitscheibe (38) das Pufferelement (32) radial überdecken.

10. Fest- oder Gleitpunktschraube (12) nach wenigstens einem der vorhergehenden Ansprüche, **dadurch gekennzeichnet, dass** das Pufferelement (32) aus einem Ethylen-Propylen-Dien-Kautschuk (EPDM) hergestellt ist.

11. Fest- oder Gleitpunktschraube (12) nach wenigstens einem der vorhergehenden Ansprüche, **dadurch gekennzeichnet, dass** der Schraubenkopf (14), Schraubenschaft (16) und die Gleitscheibe (38) aus einem Edelstahl A4 hergestellt sind.

12. Fest- oder Gleitpunktschraube (12) nach wenigstens einem der vorhergehenden Ansprüche, **dadurch gekennzeichnet, dass** der Schraubenkopf (14), das Pufferelement (32) und die Gleitscheibe (38) miteinander verbunden sind.

13. Fest- oder Gleitpunktschraube (12) nach wenigstens einem der vorhergehenden Ansprüche, **dadurch gekennzeichnet, dass** der Schraubenkopf (14), das Pufferelement (32) und die Gleitscheibe (38) miteinander verklebt oder durch Vulkanisieren des Pufferelements (32) miteinander verbunden sind oder dass das Pufferelement (32) und die Gleitscheibe (38) miteinander verklebt oder durch Vulkanisieren des Pufferelements (32) miteinander verbunden sind.

14. Fest- oder Gleitpunktschraube (12) nach wenigstens einem der vorhergehenden Ansprüche, **dadurch gekennzeichnet, dass** eine optische oder mechanische Anzugskontrolle vorgesehen ist, die zur Überprüfung eines Anzugsdrehmoments und/oder einer Einschraubtiefe der Fest- oder Gleitpunktschraube (12) ausgelegt ist.

15. Schraubenverbindung (10) umfassend ein erstes und ein zweites Bauteil (54, 58), **dadurch gekennzeichnet, dass** das erste Bauteil (54) und das zweite Bauteil (58) vom ersten Bauteil (54) her mit einer Fest- oder Gleitpunktschraube (12) nach wenigstens einem der vorhergehenden Ansprüche miteinander verschraubt sind.

16. Schraubenverbindung (10) nach Anspruch 15, **dadurch gekennzeichnet, dass** der Schraubenschaft (16) einen gewindefreien Abschnitt (44) aufweist, der zwischen dem Gewindeabschnitt (24) und dem Schraubenkopf (14) angeordnet ist und dass der gewindefreie Abschnitt (44) eine Länge aufweist, die größer ist als eine Dicke (56) des ersten Bauteils (54).

## Claims

1. Fixed or sliding point screw (12) comprising a screw head (14) and a screw shank (16) having a threaded portion (24), the screw head (14) having a torque transmission portion (18) for rotationally drivable rotation of the fixed or sliding point screw (12) about a screw axis (20) arranged concentrically to the screw head (14) and the screw shank (16), and the screw head (14) having a collar portion (28) at the end thereof that faces the threaded portion (24), a buffer element (32) made of a resilient plastics material being arranged on the side of the collar portion (28) that faces away from the torque transmission portion (18), and a sliding disk (38) being arranged on the side of the buffer element (32) that faces away from the collar portion (28), **characterized in that** the screw shank (16), in the region of the screw head (14), has a shank collar (51) having a shank diameter (52) which is greater than a thread diameter (53) in the region of the threaded portion (24), and **in that** the shank collar (51) protrudes beyond the sliding disk (38) in the direction of the threaded portion (24).

2. Fixed or sliding point screw (12) according to claim 1, **characterized in that** the collar portion (28), on the side thereof that faces away from the torque transmission portion (18), has a contact surface (30) for the buffer element (32) that is arranged in a plane perpendicular to the screw axis (20).

3. Fixed or sliding point screw (12) according to claim 1 or claim 2, **characterized in that** the buffer element (32) has two planar surfaces (34, 36) which are arranged in parallel with one another and perpendicularly to the screw axis (20).

4. Fixed or sliding point screw (12) according to at least one of the preceding claims, **characterized in that** the buffer element (32) is designed as a ring.

5. Fixed or sliding point screw (12) according to at least one of the preceding claims, **characterized in that** the sliding disk (38) has two planar surfaces (40, 42) which are arranged in parallel with one another and perpendicularly to the screw axis (20).

6. Fixed or sliding point screw (12) according to at least one of the preceding claims, **characterized in that** the fixed or sliding point screw (12) is designed as a drilling screw, the screw shank (16) having a drill bit (22) and a self-tapping thread (26).

7. Fixed or sliding point screw (12) according to at least one of the preceding claims, **characterized in that** the screw shank (16) has a thread-free portion (44) which is arranged between the threaded portion (24) and the screw head (14).

8. Fixed or sliding point screw (12) according to at least one of the preceding claims, **characterized in that** the sliding disk (38) has a Teflon coating on the side facing away from the buffer element (32).

9. Fixed or sliding point screw (12) according to at least one of the preceding claims, **characterized in that** the sliding disk (38) has an outer diameter (46) and **in that** the collar portion (28) has a collar diameter (48), the outer diameter (46) of the sliding disk (38) and the collar diameter (48) being designed such that the collar portion (28) and the sliding disk (38) radially cover the buffer element (32).

10. Fixed or sliding point screw (12) according to at least one of the preceding claims, **characterized in that** the buffer element (32) is made of an ethylene propylene diene rubber (EPDM).

11. Fixed or sliding point screw (12) according to at least one of the preceding claims, **characterized in that** the screw head (14), the screw shank (16) and the sliding disk (38) are made of an A4 stainless steel.

12. Fixed or sliding point screw (12) according to at least one of the preceding claims, **characterized in that** the screw head (14), the buffer element (32) and the sliding disk (38) are connected to one another.

13. Fixed or sliding point screw (12) according to at least one of the preceding claims, **characterized in that** the screw head (14), the buffer element (32) and the sliding disk (38) are adhesively bonded to one another or are connected to one another by vulcanization of the buffer element (32), or that the buffer element (32) and the sliding disk (38) are adhesively bonded to one another or are connected to one another by vulcanization of the buffer element (32).

14. Fixed or sliding point screw (12) according to at least one of the preceding claims, **characterized in that** a visual or mechanical tightening check is provided, which is designed to check a tightening torque and/or a screw-in depth of the fixed or sliding point screw (12).

15. Screw connection (10) comprising a first and a second component (54, 58), **characterized in that** the first component (54) and the second component (58) are screwed together from the side of the first component (54) using a fixed or sliding point screw (12) according to at least one of the preceding claims.

16. Screw connection (10) according to claim 15, **characterized in that** the screw shank (16) has a thread-free portion (44) which is arranged between the threaded portion (24) and the screw head (14), and **in that** the thread-free portion (44) has a length which is greater than a thickness (56) of the first component (54).

## Revendications

1. Vis à point fixe ou coulissant (12) comportant une tête de vis (14) et une tige de vis (16) présentant une partie filetée (24), la tête de vis (14) présentant une partie de transmission de couple (18) permettant la rotation entraînée en rotation de la vis à point fixe ou coulissant (12) autour d'un axe de vis (20) disposé concentriquement par rapport à la tête de vis (14) et à la tige de vis (16) et la tête de vis (14) présentant une partie collerette (28) à son extrémité tournée vers la partie filetée (24), un élément tampon (32) en matière plastique élastique étant disposé sur le côté de la partie collerette (28) opposé à la partie de transmission de couple (18) et une rondelle coulissante (38) étant disposée sur le côté de l'élément tampon (32) opposé à la partie collerette (28), **caractérisée en ce que** la tige de vis (16) présente, dans la zone de la tête de vis (14), une collerette de tige (51) comportant un diamètre de tige (52) supérieur à un diamètre de filetage (53) dans la zone de la partie filetée (24), et **en ce que** la collerette de tige (51) fait saillie au-delà de la rondelle coulissante (38) en direction de la partie filetée (24).

2. Vis à point fixe ou coulissant (12) selon la revendication 1, **caractérisée en ce que** la partie collerette (28) présente, sur son côté opposé à la partie de transmission de couple (18), une surface d'appui (30) destinée à l'élément tampon (32) et disposée dans un plan perpendiculaire à l'axe de vis (20).

3. Vis à point fixe ou coulissant (12) selon la revendication 1 ou 2, **caractérisée en ce que** l'élément tampon (32) présente deux surfaces planes (34, 36) disposées parallèlement l'une à l'autre et perpendiculairement à l'axe de vis (20).

4. Vis à point fixe ou coulissant (12) selon au moins l'une des revendications précédentes, **caractérisée en ce que** l'élément tampon (32) est réalisé sous forme de bague.

5. Vis à point fixe ou coulissant (12) selon au moins l'une des revendications précédentes, **caractérisée en ce que** la rondelle coulissante (38) présente deux surfaces planes (40, 42) disposées parallèlement l'une à l'autre et perpendiculairement à l'axe de vis (20).

6. Vis à point fixe ou coulissant (12) selon au moins l'une des revendications précédentes, **caractérisée en ce que** la vis à point fixe ou coulissant (12) est réalisée sous forme de vis de perçage, la tige de vis (16) présentant une pointe de perçage (22) et un filetage autotaraudeur (26) .

7. Vis à point fixe ou coulissant (12) selon au moins l'une des revendications précédentes, **caractérisée en ce que** la tige de vis (16) présente une partie non filetée (44) disposée entre la partie filetée (24) et la tête de vis (14) .

8. Vis à point fixe ou coulissant (12) selon au moins l'une des revendications précédentes, **caractérisée en ce que** la rondelle coulissante (38) présente un revêtement en téflon sur le côté opposé à l'élément tampon (32).

9. Vis à point fixe ou coulissant (12) selon au moins l'une des revendications précédentes, **caractérisée en ce que** la rondelle coulissante (38) présente un diamètre extérieur (46) et **en ce que** la partie collerette (28) présente un diamètre de collerette (48), le diamètre extérieur (46) de la rondelle coulissante (38) et le diamètre de collerette (48) étant conçus de telle sorte que la partie collerette (28) et la rondelle coulissante (38) recouvrent radialement l'élément tampon (32).

10. Vis à point fixe ou coulissant (12) selon au moins l'une des revendications précédentes, **caractérisée en ce que** l'élément tampon (32) est en un caoutchouc éthylène-propylène-diène (EPDM).

11. Vis à point fixe ou coulissant (12) selon au moins l'une des revendications précédentes, **caractérisée en ce que** la tête de vis (14), la tige de vis (16) et la rondelle coulissante (38) sont en acier inoxydable A4.

12. Vis à point fixe ou coulissant (12) selon au moins l'une des revendications précédentes, **caractérisée en ce que** la tête de vis (14), l'élément tampon (32) et la rondelle coulissante (38) sont reliés les uns aux autres.

13. Vis à point fixe ou coulissant (12) selon au moins l'une des revendications précédentes, **caractérisée en ce que** la tête de vis (14), l'élément tampon (32) et la rondelle coulissante (38) sont collés les uns aux autres ou sont reliés les uns aux autres par vulcanisation de l'élément tampon (32) ou **en ce que** l'élément tampon (32) et la rondelle coulissante (38) sont collés l'un à l'autre ou reliés l'un à l'autre par vulcanisation de l'élément tampon (32).

14. Vis à point fixe ou coulissant (12) selon au moins l'une des revendications précédentes, **caractérisée en ce qu'**une commande de serrage optique ou mécanique est prévue pour contrôler un couple de serrage et/ou une profondeur de vissage de la vis à point fixe ou coulissant (12).

15. Liaison vissée (10) comprenant un premier et un second composants (54, 58), **caractérisée en ce que** le premier composant (54) et le second composant (58) sont vissés ensemble à partir du premier composant (54) au moyen d'une vis à point fixe ou coulissant (12) selon au moins l'une des revendications précédentes.

16. Liaison vissée (10) selon la revendication 15, **caractérisée en ce que** la tige de vis (16) présente une partie non filetée (44) disposée entre la partie filetée (24) et la tête de vis (14) et **en ce que** la partie non filetée (44) présente une longueur supérieure à une épaisseur (56) du premier composant (54).
